# EUROPÄISCHE PATENTSCHRIFT

(11) **EP 2 636 124 B1**
(45) Veröffentlichungstag und Bekanntmachung des Hinweises auf die Patenterteilung: **01.03.2017**
(21) Anmeldenummer: 11776445.6
(22) Anmeldetag: 31.10.2011
(51) Int. Cl.: H02K 1/18, H02K 7/18

(54) **GENERATOR**
GENERATOR
GÉNÉRATEUR

(30) Priorität: 04.11.2010 DE 102010043426
(43) Veröffentlichungstag der Anmeldung: 11.09.2013
(73) Patentinhaber: Wobben Properties GmbH, 26607 Aurich (DE)
(72) Erfinder: GUDEWER, Wilko, 26506 Norden (DE)
(74) Vertreter: Eisenführ Speiser
(86) Internationale Anmeldenummer: PCT/EP2011/069112
(87) Internationale Veröffentlichungsnummer: WO 2012/059461

(56) Entgegenhaltungen:
- EP-A1- 0 022 314
- EP-A1- 0 087 116
- EP-A1- 0 367 044
- DE-A1- 1 808 577
- DE-A1- 10 040 236
- US-A1- 2011 140 552

## Beschreibung

Die Erfindung betrifft einen elektrischen Generator, z.B. einen Generator, welcher als Synchrongenerator oder auch als Ringgenerator für eine Windenergieanlage ausgebildet ist. Solche Generatoren sind bekannt und werden z.B. in großer Stückzahl für Windenergieanlagen von der Firma Enercon GmbH, Aurich hergestellt und die Leistung solcher Generatoren liegt durchaus im Bereich von 500kW oder mehr, in der Spitze auch bis zu 7,5MW oder mehr.

Solche Generatoren weisen einen zum Teil beachtlichen Durchmesser auf, weil die Windenergieanlagen der Firma Enercon über kein Getriebe verfügen und der Durchmesser kann dabei je nach Leistung des Generators zwischen 3 und 12 m oder mehr schwanken.

Die Drehzahl solcher Generatoren (auch Synchron- oder Ringgeneratoren genannt) beträgt aufgrund der direkten Kopplung des Generatorläufers zum aerodynamischen Rotor der Windenergieanlage ca. 10 bis 22 Umdrehungen pro Minute. Es handelt sich also dabei um Generatoren, die als "langsam laufend" eingestuft werden und die verwendeten Generatoren sind dabei Vielpolgeneratoren z.B. mit 78 Polen oder Polpaaren.

Der Generator besteht wie bei jedem elektrischen Generator aus einem Stator und einem Läufer (der Begriff Rotor wird hier nicht verwendet, weil der Begriff Rotor bei Windenergieanlagen regelmäßig für den drehenden Teil des aerodynamischen Systems, also den aerodynamischen Rotor, vergeben worden ist).

Die Tiefe solcher Generatoren liegt im Bereich von 200 bis 800 mm.

Der Generatorstator besteht aus einem Statorring, welcher mit Nuten versehene Blechpakete aufnimmt, die über 360° an der Innenseite des Statorringes ein geschlossenes Gebilde einnehmen. In den Nuten dieser Blechpakete sind die Windungen des elektrischen Generatorsystems eingelegt und in diese Windungen wird im Betrieb des Generators die elektrische Leistung induziert.

Bei den Blechen des Blechpakets handelt es sich um klassische Dynamobleche. Diese werden manuell oder maschinell nach einem bestimmten Muster verlegt und werden dabei auch von Schraubbolzen aufgenommen, die nach Fertigstellung des Blechpakets fest angezogen werden, um die einzelnen Bleche aneinander zu pressen.

Das Blechpaket selbst wird nach Fertigstellung an dem Statorring befestigt, z.B. durch Verschrauben oder durch Verschweißen.

Als Stand der Technik sei allgemein auf die Dokumente US 3,708,707 A, US 2,973,442 A, US 1,685,054 A, DE 1 232 651 B und DE 2 148 827 A verwiesen.

Das bisherige System des Generators hat sich als sehr zuverlässig erwiesen, gleichwohl wird angestrebt, auch Generatoren zu fertigen, die eine noch größere Tiefe aufweisen und bei denen dann immer noch ein sicherer Betrieb insbesondere ein gleichbleibender Luftspalt zwischen Stator und Läufer bestehen bleibt.

Dieses Ziel wird erfindungsgemäß mit einem Generator mit den Merkmalen nach Anspruch 1 erreicht. Vorteilhafte Weiterbildungen sind in den Unteransprüchen beschrieben.

Im Stand der Technik wurden bislang Blechpakete nur an zwei Stellen am Statorring befestigt.

Wenn aber die Generatortiefe zunimmt, z.B. auf 1200mm (oder mehr), die Blechpakete also axial noch länger werden, ist auch dann dafür Sorge zu tragen, dass der Luftspalt zwischen Stator und Läufer gleich bleibt und eine zuverlässige Kühlung und damit ein guter Wärmeübergang zwischen den Windungen/Blechen des Generators einerseits und den Kühlkanälen im Statorring oder Statorträger andererseits gegeben ist. Es ist also das Ziel, dass über die gesamte Breite des Generators die Blechpakete und damit die Bleche unmittelbar auch in Berührung zum Statorring verbleiben. Um dies sicher zu gewährleisten, schlägt die Erfindung vor, die Blechpakete nicht nur an ihren äußeren Stellen an zwei Punkten an dem Statorring zu befestigen, sondern noch an wenigstens einem weiteren Punkt, nämlich etwa in der Mitte des Blechpakets.

Erfindungsgemäß wird damit vor allem erreicht, dass ein Blechpaket nicht "durchhängen" kann, also nicht aufgrund seines Eigengewichts sich nach unten bewegen kann, was letztlich eine Verringerung des Luftspalts zur Folge hätte oder im schlimmsten Fall dazu führen könnte, dass Stator und Läufer sich mechanisch berühren.

Die Erfindung ist nachfolgend anhand eines Ausführungsbeispiels näher erläutert.

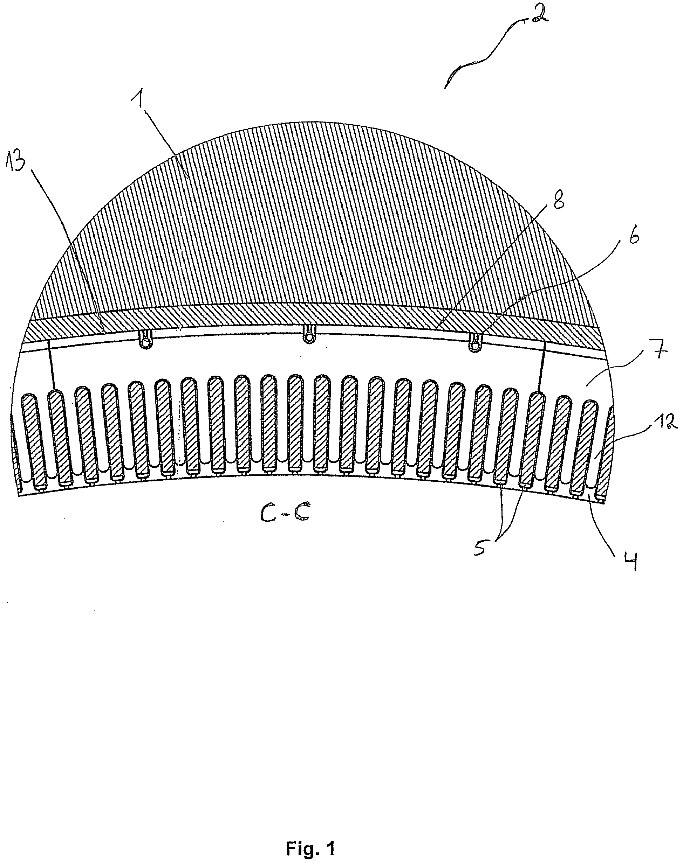

Fig. 1 zeigt einen den Ausschnitt aus einem Statorring 1 eines Stators 2 eines Generators 3, z.B. des Synchrongenerators einer Windenergieanlage. Innerhalb des Statorringes 1 ist ein Blechpaket 4 ausgebildet, welches durch Aufeinanderliegen einer Vielzahl von einzelnen (Dynamo-)Blechen (nicht dargestellt) gebildet wird.

Das Blechpaket 4 bildet Nuten 5, in welche später die Windungen für den Stator 2 eingebracht werden. Das Blechpaket 4 selbst wird von einer Vielzahl von Schraubbolzen 6 durchsetzt und wird im dargestellten Beispiel von einem Stützring 7 abgeschlossen. Dieser Stützring ist - wie in der Fig. 1 zu erkennen - ebenfalls von den Schraubbolzen 6 durchsetzt und mittels einer Schweißnaht 8 an dem Statorring 1 am Punkt 13 befestigt.

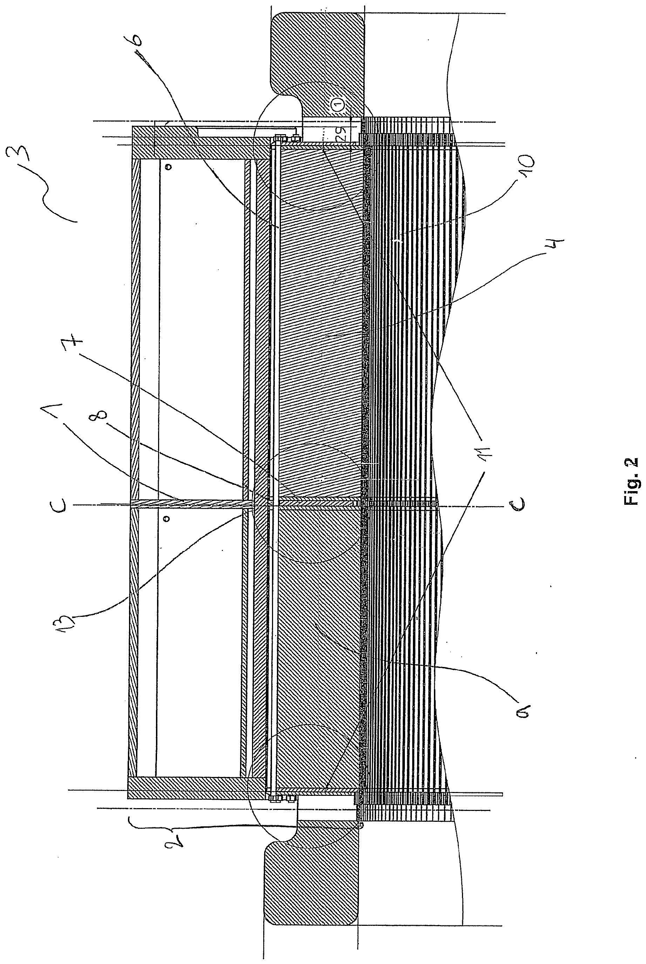

Der Stützring 7 gemäß Fig. 1 befindet sich nicht an der Außenseite des Blechpakets, sondern etwa in der Mitte - s. Fig. 2 -, so dass nach Verschweißen des Stützrings 7 weitere Bleche auf den Stützring gelegt werden können, um einen zweiten Teil 9 des gesamten Blechpakets 10 des Stators 2 zu bilden.

Fig. 2 zeigt einen Querschnitt durch den erfindungsgemäßen Generator 3. Dabei ist zu erkennen, dass die Schraubbolzen 6 das gesamte Blechpaket 10 und den Stützring 7 durchsetzen und das Blechpaket 10 wird an seinen Außenseiten durch Druckbleche 11 begrenzt. Die Schraubbolzen 6 sind mit einem hohen Anzugsmoment versehen, um die Bleche des Blechpakets 4, 9, 10 möglichst eng aneinander zu pressen. Die außen am Blechpaket anliegenden Druckbleche 11, die im Vergleich zu den einzelnen Blechen des Blechpakets über eine große Breite verfügen, sind an dem Statorring 1 angeschweißt. Dies gilt auch für den Stützring 7 etwa in der Mitte des Blechpakets, so dass das gesamte Blechpaket an wenigstens drei Punkten fest mit dem Statorring 1 verbunden ist. Die einzelnen Bleche des Blechpakets wie auch der Stützring weisen entsprechende Bohrungen auf, um die Schraubbolzen 6 aufzunehmen, so dass auch die Bleche von den Schraubbolzen 6 mitgetragen werden.

Der beschriebene und in den Zeichnungen dargestellte Generator 3 hat vorzugsweise eine Tiefe von ca. 1200 mm und einen Außendurchmesser des Stators von ca. 5m. Bevorzugt wird der Generator 3 in einer Windenergieanlage untergebracht.

Der erfindungsgemäße Generator 3 zeichnet sich auch dadurch aus, dass das gesamte Blechpaket 10 in zwei Teilbereiche 4, 9 aufgeteilt ist, die durch den beschriebenen Stützring 7 getrennt werden. Dies ist auch beim Blick auf die Statorwicklungen des fertigen Generators noch zu erkennen, weil der Stützring 7 im Vergleich zu den Blechen eine relativ große Dicke aufweist und der Stützring Finger 12 aufweist, die nicht ganz so lang sind, wie die Nuttiefe, welche durch die Nuten 5 der Dynamobleche gebildet wird.

In Fig. 1 ist der Stützring 7 oben aufliegend auf den Blechpaketen zu sehen. Die Blechpakete bestehen wie erwähnt aus aufeinander gelegten Blechen, die jeweils die dargestellten Nutformen aufweisen. Eine bestimmte Anzahl von Blechlagen, z.B. 5 bis 20 Blechlagen, nämlich die Blechlagen, die unmittelbar unterhalb des Stützringes 7 liegen, sind darüber hinaus bevorzugt miteinander verklebt, um in diesem Bereich einen bestmöglichen Zusammenhalt dieser Bleche dort zu gewährleisten, weil die Bleche selbst an ihrem freien Ende nicht vollständig von den Fingern 12 des Stützrings 7, welcher bevorzugt aus dem gleichen Material wie die Druckbleche besteht und bevorzugt auch die gleiche Form aufweist, abgedeckt wird.

## Patentansprüche

1. Elektrischer Synchron-Generator (3) einer Windenergieanlage mit einem Generator-Stator (2), welcher Wicklungen aufweist, die in Nuten (5) liegen, die durch Bleche gebildet werden, wobei der Stator (2) einen vorbestimmten Durchmesser und eine vorbestimmte Tiefe aufweist, wobei die Bleche ein Blechpaket (4, 9, 10) bilden, welches von Schraubbolzen (6) durchsetzt ist und wobei das Blechpaket (4, 9, 10) an seinem vorderen und hinteren Ende an einem Statorring (1) des Stators (2) befestigt ist,
**dadurch gekennzeichnet, dass** ein weiterer Befestigungspunkt (13) des Blechpakets am Statorring (1) ausgebildet ist, wobei dieser Befestigungspunkt (13) sich etwa in der Mitte des Statorringes (1) befindet und am Befestigungspunkt (13) ein Stützring (7) angeschweißt ist und dass das Blechpaket (10) in zwei Teile (4, 9 aufgeteilt ist und die beiden Teile durch den Stützring (7) getrennt werden und dass der Generator (3) eine Tiefe von mehr als 1000 mm, z.B. 1200 mm und einen Durchmesser von mehr als 2m, z.B. 5m und eine Nennleistung von mehr 1MW, z.B. 3MW. aufweist.

2. Windenergieanlage mit einem Generator nach einem der vorhergehenden Ansprüche.

## Claims

1. An electric synchronous generator (3) of a wind power installation comprising a generator stator (2) having windings which are disposed in grooves (5) formed by sheets, wherein the stator (2) is of a predetermined diameter and a predetermined depth, wherein the sheets form a laminated sheet assembly (4, 9, 10) through which screw bolts (6) pass and wherein at its front and rear ends the laminated sheet assembly (4, 9, 10) is fixed to a stator ring (1) of the stator (2),
**characterised in that** a further fixing point (13) of the laminated sheet assembly is provided on the stator ring (1), wherein said fixing point (13) is approximately in the centre of the stator ring (1) and a support ring (7) is welded to the fixing point (13) and **in that** the laminated sheet assembly (10) is divided into two parts (4, 9) and the two parts are separated by the support ring (7) and **in that** the generator (3) is of a depth of more than 1000 mm, for example 1200 mm, and is of a diameter of more than 2 m, for example 5 m, and has a nominal power output of more than 1 MW, for example 3 MW.

2. A wind power installation having a generator according to one of the preceding claims.

## Revendications

1. Générateur (3) synchrone électrique d'une éolienne avec un stator (2) de générateur qui présente des enroulements qui reposent dans des gorges (5) qui sont formées par des tôles, dans lequel le stator (2) présente un diamètre prédéfini et une profondeur prédéfinie, dans lequel les tôles forment un paquet de tôles (4, 9, 10) qui est traversé par des boulons filetés (6) et dans lequel le paquet de tôles (4, 9, 10) est fixé au niveau de son extrémité avant et de son extrémité arrière à une bague de stator (1) du stator (2),
**caractérisé en ce qu'**un autre point de fixation (13) du paquet de tôles est réalisé au niveau de la bague de stator (1), dans lequel ce point de fixation (13) se trouve à peu près au milieu de la bague de stator (1), et une bague d'appui (7) est soudée au point de fixation (13), et **en ce que** le paquet de tôles (10) est divisé en deux parties (4, 9) et les deux parties sont séparées par la bague d'appui (7) et **en ce que** le générateur (3) présente une profondeur de plus de 1000 mm, par exemple de 1200 mm, et un diamètre de plus de 2 m, par exemple 5 m, et une puissance nominale de plus de 1 MW, par exemple de 3 MW.

2. Éolienne avec un générateur selon la revendication précédente.
